# EUROPEAN PATENT SPECIFICATION

(11) **EP 3 361 115 B1**
(45) Date of publication and mention of the grant of the patent: **21.08.2019**
(21) Application number: 18155243.1
(22) Date of filing: 06.02.2018
(51) Int. Cl.: F16D 55/224, F16D 65/00

(54) **CALIPER DEVICE**
BREMSSATTELVORRICHTUNG
DISPOSITIF D'ÉTRIER

(30) Priority: 09.02.2017 JP 2017022217
(43) Date of publication of application: 15.08.2018
(73) Proprietor: Nabtesco Corporation, Tokyo 102-0093 (JP)
(72) Inventor: OHNO, Tomoya, Kobe-shi, Hyogo 651-2271 (JP)
(74) Representative: Grünecker Patent- und Rechtsanwälte PartG mbB

(56) References cited:
- US-A- 5 058 712
- US-A1- 2016 159 375

## Description

The present invention relates to a caliper device used in a vehicle disc brake apparatus.

A known caliper device applies braking force to a wheel of a railway vehicle by pressing brake shoes against a disc that rotates together with the wheel. Such a caliper device includes a cylinder device that actuates the brake shoes using fluid such as compressed air and arms connected to the cylinder device. The arms are rotated by the cylinder device about respective support shafts to move the brake shoes toward and away from the disc (for example, refer to US5058712 or Japanese Laid-Open Patent Publication No. 2010-164183).

A caliper device is pivotally coupled to a truck of a railway vehicle so that the disc and the brake shoes remain parallel to each other when the truck is inclined from an axle rotating the wheel as the railway vehicle travels. However, with such a structure, the caliper device may pivot due to vibration produced when the railway vehicle is traveling. This may result in contact of the brake shoes with the disc in a non-braking state, that is, when braking force is not produced. Such a problem is not limited to railway vehicles and also occurs in a caliper device used in a disc brake apparatus of an industrial vehicle such as a lorry, a bus, or an aerial work platform vehicle.

Accordingly, it is an object of the present invention to provide a caliper device that limits unnecessary contact of brake shoes with a disk in a non-braking state.

To solve the above problem, a caliper device is provided that includes a coupling member coupled to a bracket and movable relative to the bracket. The bracket is attached to a vehicle having a wheel. The coupling member supports two arms. Two brake shoes are located to hold a disc that rotates together with the wheel of the vehicle. When the two arms rotate, the two brake shoes are selectively moved between a position contacting the disc and a position separated from the disc. The caliper device further includes a resistance application portion that applies a resistance to relative movement of the coupling member and the bracket.

With the above structure, the resistance produced against the relative movement of the coupling member and the bracket restricts movement of the coupling member relative to the bracket. Thus, unnecessary contact of the brake shoes with the disc is effectively limited in a non-braking state. The resistance may be applied by the resistance application portion using the friction force produced by contact between relatively moving members. Alternatively, a mechanism using magnetic force or fluidal viscous force may be used as a resistance application portion. Each brake shoe of the caliper device is separated from the disc by a distance that changes when the coupling member pivots relative to the bracket. The relative movement of the coupling member and the bracket may be the pivotal movement using the coupling shaft. Alternatively, the relative movement may be arcuate movement or linear movement using a guide mechanism. The bracket may be attached to, for example, a truck or a vehicle body of a railway vehicle. The vehicle is not limited to a railway vehicle and includes industrial vehicles such as a lorry, a bus, and an aerial work platform vehicle.

Preferably, in the above caliper device, the coupling member is coupled to the bracket by a coupling shaft and pivotable about the coupling shaft.

With the above structure, the pivoting of the coupling member relative to the bracket allows the relative movement of the bracket and the coupling member.

Preferably, in the above caliper device, the resistance application portion includes a friction mechanism that increases friction force produced by relative movement of the coupling member and the bracket.

With the above structure, the resistance is applied to the relative movement using a relatively simple structure simply including the friction mechanism for increasing friction force between relatively moving members.

Preferably, in the above caliper device, the friction mechanism includes a pressing member arranged on one of the bracket, the coupling member, and the coupling shaft, and when the coupling member and the bracket pivot, the pressing member produces the friction force by being pressed against a portion moving relative to the pressing member.

With the above structure, the friction mechanism is arranged on a component of the caliper device. This eliminates the need for a further component for arranging the friction mechanism. As compared to a device including a member dedicated to the arrangement of the friction mechanism, the number of components of the caliper device is reduced.

Preferably, in the above caliper device, the coupling shaft is fixed to one of the bracket and the coupling member, and the pressing member is arranged on a further one of the bracket and the coupling member and pressed against the coupling shaft.

With the above structure, the pressing member is pressed against the coupling shaft, about which the coupling member pivots. Thus, the bracket and the coupling member do not need to further include a portion against which the pressing member is pressed.

Preferably, in the above caliper device, the pressing member is arranged on one of the bracket and the coupling member, and when the pressing member is pressed against a further one of the bracket and the coupling member, the pressing member is in planar contact with the further one of the bracket and the coupling member.

With the above structure, as compared to a structure in which the pressing member is pressed against the coupling shaft, the area of contact between the bracket or the coupling member and the pressing member is easily ensured. This limits wear of the pressing member and the coupling member caused by the pivoting of the coupling member.

Preferably, in the above caliper device, the friction mechanism includes an urging member that produces the friction force by urging the pressing member.

With the above structure, the urging member urges the pressing member to apply a resistance to relative movement of the bracket and the coupling member.

The caliper device of the present invention limits unnecessary contact of the brake shoes with the disc in a non-braking state.

Other aspects and advantages of the invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a right side view showing the structure of a caliper device of a first embodiment;
Fig. 2 is a left side view showing the structure of the caliper device of the first embodiment;
Fig. 3 is an exploded perspective view showing the structure of the caliper device of the first embodiment;
Fig. 4 is a top view showing the structure of the caliper device of the first embodiment;
Fig. 5 is a front view showing the structure of the caliper device of the first embodiment;
Fig. 6 is an enlarged cross-sectional view showing the structure of a friction mechanism of the caliper device of the first embodiment;
Fig. 7 is an exploded perspective view showing the structure of the friction mechanism of the caliper device of the first embodiment;
Fig. 8 is an enlarged cross-sectional view showing the structure of a driving side friction mechanism of the caliper device of the first embodiment;
Fig. 9 is an enlarged cross-sectional view showing the structure of a braking side friction mechanism of the caliper device of the first embodiment;
Fig. 10 is an exploded perspective view showing the structure of a caliper device of a second embodiment;
Fig. 11 is a partially cross-sectional view showing a friction mechanism of the caliper device of the second embodiment;
Fig. 12 is a front view showing the structure of the caliper device of the second embodiment;
Fig. 13 is an enlarged cross-sectional view showing the friction mechanism of the caliper device of the second embodiment;
Fig. 14 is a partially cross-sectional view showing a modified example of a caliper device;
Fig. 15 is a partially cross-sectional view showing a modified example of a caliper device;
Fig. 16 is a partially cross-sectional view showing a modified example of a caliper device;
Fig. 17 is a partially cross-sectional view showing a modified example of a caliper device;
Fig. 18 is a partially cross-sectional view showing a modified example of a caliper device;
Fig. 19 is a partially cross-sectional view showing a modified example of a caliper device;
Fig. 20 is a partially cross-sectional view showing a modified example of a caliper device;
Fig. 21 is a partially cross-sectional view showing a modified example of a caliper device;
Fig. 22 is a partially cross-sectional view showing a modified example of a caliper device;
Fig. 23 is a partially cross-sectional view showing a modified example of a caliper device;
Fig. 24 is a partially cross-sectional view showing a modified example of a caliper device;
Fig. 25 is a partially cross-sectional view showing a modified example of a caliper device;
Fig. 26 is a partially cross-sectional view showing a modified example of a caliper device; and
Fig. 27 is a partially cross-sectional view showing a modified example of a caliper device.

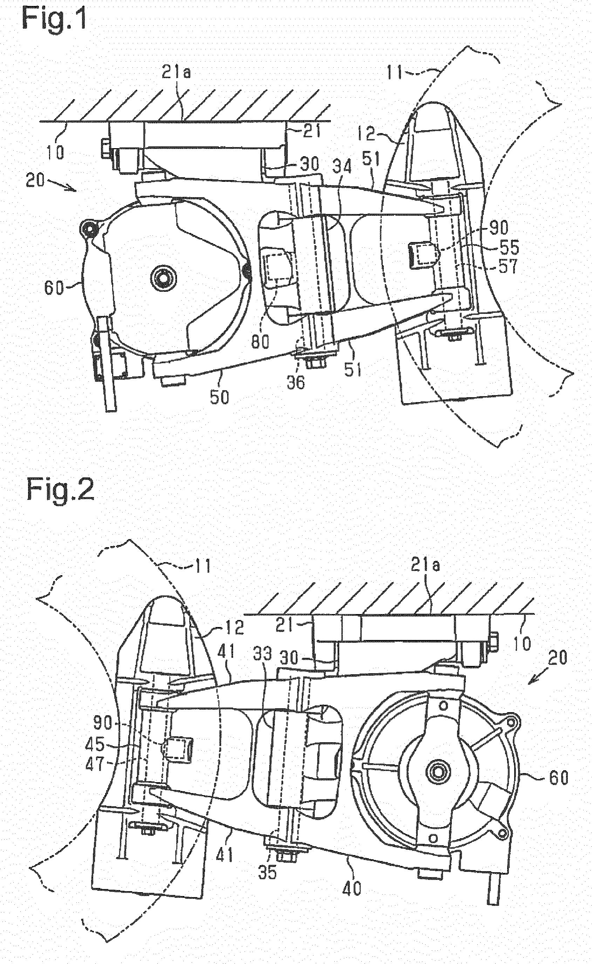

A first embodiment of a caliper device will now be described with reference to Figs. 1 to 9.

As shown in Figs. 1 and 2, a caliper device 20 is coupled to a truck 10 of a railway vehicle to apply braking force to a wheel of the truck 10 by pressing belt-shaped brake shoes 12 onto a disc 11, which rotates together with an axle rotating the wheel. A disc brake apparatus includes the caliper device 20 and the disc 11.

The caliper device 20 includes a bracket 21 attached to the truck 10, a coupling member 30 pivotally coupled to the bracket 21, and a left arm 40 and a right arm 50 that are supported by the coupling member 30. The caliper device 20 also includes a cylinder device 60 supported by ends of the left arm 40 and the right arm 50 to drive the left arm 40 and the right arm 50 by supplying and discharging compressed air.

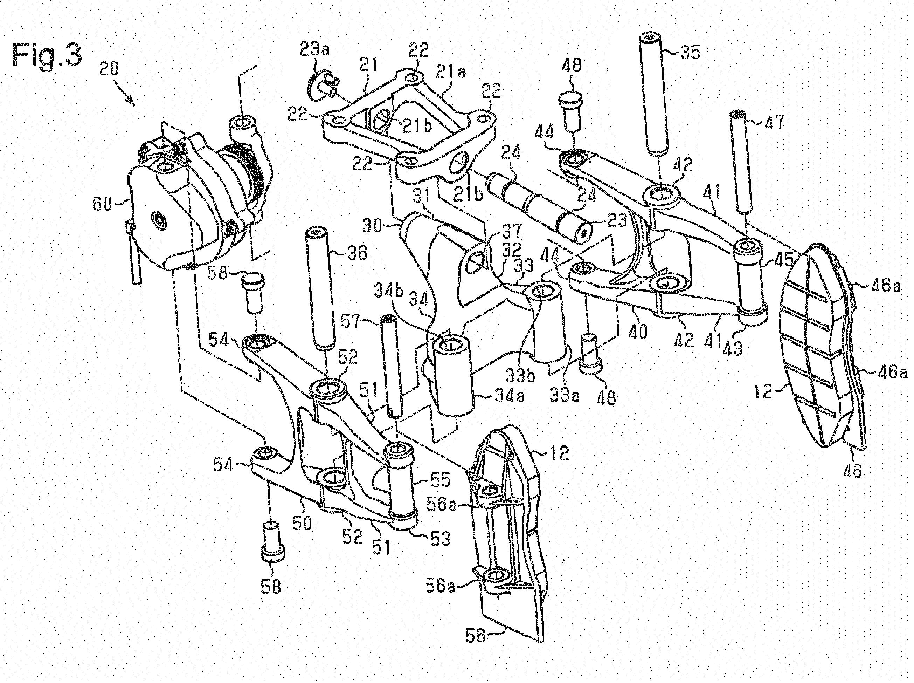

As shown in Figs. 3, 4, and 6, the bracket 21 includes a rectangle frame body 21a. Each of the four corners of the bracket 21 has an attachment hole 22 used to attach the bracket 21 to the truck 10 with a bolt (not shown). The frame body 21a has two through holes 21b. A coupling shaft 23 extends through the through holes 21 b. The coupling shaft 23 is fixed to the frame body 21a by a bolt 23a. The coupling member 30 is pivotable about the axis of the coupling shaft 23. The axis of the coupling shaft 23 is located at a position different from a longitudinally middle portion of each brake shoe 12a in the longitudinal direction of the brake shoe 12a, and specifically, at a position vertically above the longitudinally middle portions of the brake shoes 12.

The coupling member 30 includes a base 31, a connection portion 32 downwardly extending from the base 31, a left support portion 33, and a right support portion 34. The left support portion 33 and the right support portion 34 respectively extend leftward and rightward from the connection portion 32 to support the left arm 40 and the right arm 50. The left support portion 33 has a distal portion 33a through which an insertion hole 33b extends. A left driving rotation shaft 35, which functions as a support shaft rotatably supporting the left arm 40, is rotatably inserted through the insertion hole 33b. Also, the right support portion 34 has a distal portion 34a through which an insertion hole 34b extends. A right driving rotation shaft 36, which functions as a support shaft rotatably supporting the right arm 50, is rotatably inserted through the insertion hole 34b.

The left arm 40 includes two left extensions 41 opposed to and separated from each other in the axial direction of the left driving rotation shaft 35. Each of the left extensions 41 includes a left insertion portion 42. When the left driving rotation shaft 35 is inserted into the insertion hole 33b of the left support portion 33, two opposite ends of the left driving rotation shaft 35 are fixed to the left insertion portions 42. Each of the left extensions 41 includes an output portion 43 and an input portion 44 that extend from the left insertion portion 42 in directions different from (opposite to) each other. The distal end of the output portion 43 includes a coupling portion 45 coupling the two left extensions 41 to each other.

The coupling portion 45 is coupled by a brake shoe rotation shaft 47 to a brake shoe attachment member 46, to which one of the brake shoes 12 is attached. The brake shoe rotation shaft 47 is inserted into the coupling portion 45 and also inserted and fixed to two support portions 46a of the brake shoe attachment member 46. The brake shoe rotation shaft 47 is rotatable relative to the distal ends of the left extensions 41. The brake shoe rotation shaft 47 is fixed to the brake shoe attachment member 46.

The right arm 50 includes two right extensions 51 opposed to and separated from each other in the axial direction of the right driving rotation shaft 36. Each of the right extensions 51 includes a right insertion portion 52. When the right driving rotation shaft 36 is inserted into the insertion hole 34b of the right support portion 34, two opposite ends of the right driving rotation shaft 36 are fixed to the right insertion portions 52. Each of the right extensions 51 includes an output portion 53 and an input portion 54 that extend from the right insertion portion 52 in directions different from (opposite to) each other. The distal end of the output portion 53 includes a coupling portion 55 coupling the two right extensions 51 to each other.

The coupling portion 55 is coupled by a brake shoe rotation shaft 57 to a brake shoe attachment member 56, to which one of the brake shoes 12 is attached. The brake shoe rotation shaft 57 is inserted into the coupling portion 55 and also inserted and fixed to two support portions 56a of the brake shoe attachment member 56. The brake shoe rotation shaft 57 is rotatable relative to the distal ends of the right extensions 51. The brake shoe rotation shaft 57 is fixed to the brake shoe attachment member 56.

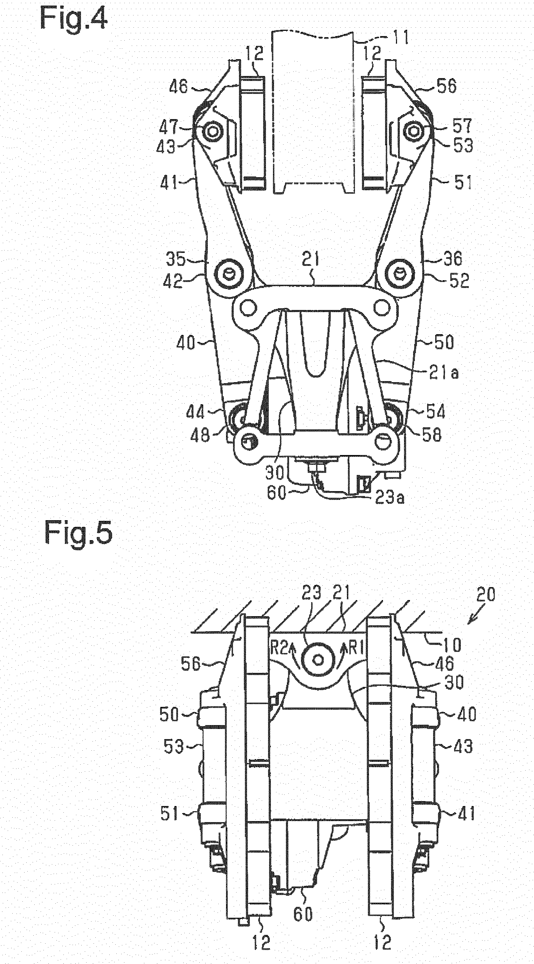

As shown in Fig. 4, the left arm 40 and the right arm 50 are located at opposite sides of the disc 11 in the thickness direction of the disc 11 (direction in which center axis of disc 11 extends). The brake shoe attachment members 46 and 56 are opposed to the disc 11 in the thickness direction of the disc 11.

As shown in Figs. 3 and 4, the cylinder device 60 is coupled to the distal ends of the input portions 44 of the left arm 40 by left fixing members 48. The left fixing member 48 is rotatably coupled to the input portion 44. The cylinder device 60 is thus rotatably coupled to the input portions 44. Also, the cylinder device 60 is coupled to the distal ends of the input portions 54 of the right arm 50 by right fixing members 58. The right fixing member 58 is rotatably coupled to the input portion 54. The cylinder device 60 is thus rotatably coupled to the input portions 54. The cylinder device 60 is supported between the input portions 44 of the left arm 40 and the input portions 54 of the right arm 50.

The cylinder device 60 applies driving force to the input portions 44 and 54 to separate the distal ends of the input portions 44 and the distal ends of the input portions 54 (left fixing members 48 and right fixing members 58) from each other based on compressed air supplied from and discharged to a supply-discharge portion (not shown). The cylinder device 60 includes a return spring (not shown) that applies force to the input portions 44 and 54 to separate the brake shoes 12 from the disc 11. With the disc 11 held by the brake shoes 12, when compressed air is discharged from the cylinder device 60 and the force of the return spring applied to the input portions 44 and 54 becomes greater than the force of the cylinder device 60 applied to the input portions 44 and 54, the brake shoes 12 separate from the disc 11.

The caliper device 20 is pivotally coupled to the truck 10 so that the disc 11 and the brake shoes 12 remain parallel to each other when the truck 10 is inclined as the railway vehicle travels. Thus, the caliper device 20 may pivot due to vibration produced when the railway vehicle is traveling. This may result in contact of the brake shoes 12 with the disc 11 in a non-braking state, that is, when braking force is not produced. To solve such a problem, the caliper device 20 is provided with a friction mechanism that increases friction force produced by relative movement of the bracket 21 and the coupling member 30 that occurs when the coupling member 30 pivots.

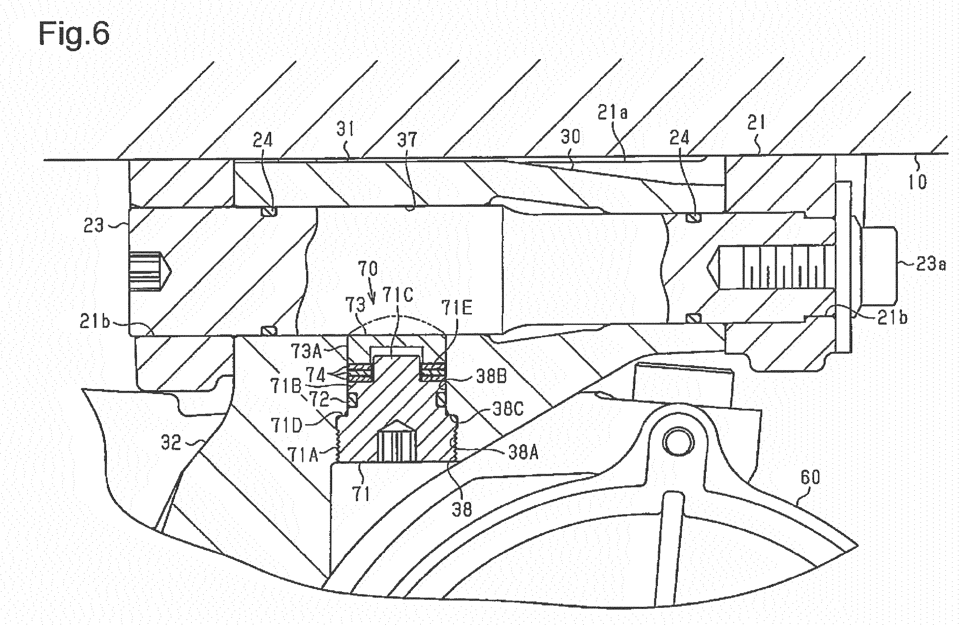

As shown in Fig. 6, the coupling member 30 includes a friction mechanism 70, which is pressed against the coupling shaft 23 fixed to the bracket 21. The friction mechanism 70 is inserted and fixed to the base 31 of the coupling member 30 from the side thereof closer to the connection portion 32 of the coupling member 30.

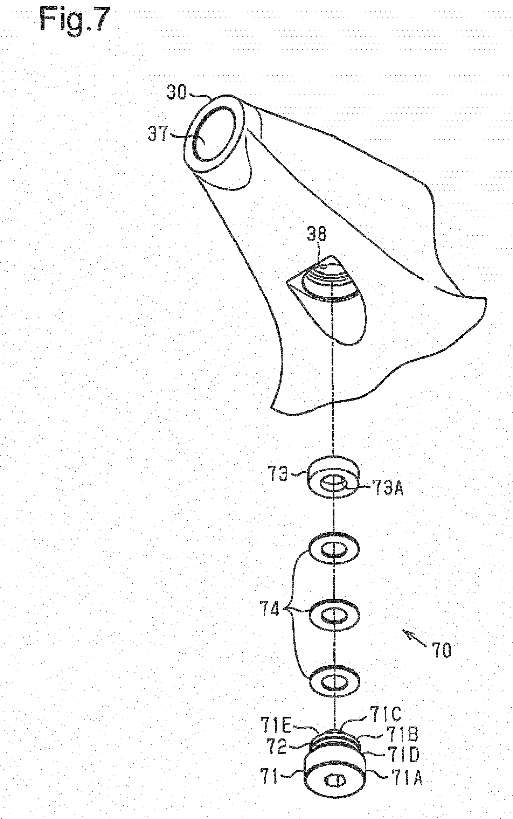

As shown in Fig. 7, the friction mechanism 70 includes a plug 71 coupled to the base 31 of the coupling member 30. A pressing member 73, which has the form of a tube having a closed end, and three urging members 74 are attached to the plug 71. In one example, the three urging members 74 are disc springs and held by the plug 71 and the pressing member 73. The number of the urging members 74 may be one, two, or four or more.

A tubular threaded portion 71A, a rod-shaped sealing portion 71B, and a rod-shaped attachment portion 71C are continuously formed on the plug 71. The diameters of the threaded portion 71A, the sealing portion 71B, and the attachment portion 71C are decreased in order from the threaded portion 71A to the sealing portion 71B and then the attachment portion 71C. A first step 71D is formed between the sealing portion 71B and the threaded portion 71A. A second step 71E is formed between the sealing portion 71B and the attachment portion 71C. The outer circumference of the threaded portion 71A has external threads. A seal member 72 is attached to the outer circumference of the sealing portion 71B. One example of the seal member 72 is an O-ring.

As shown in Fig. 6, a first receptacle 37 extends in the base 31 of the coupling member 30 in the axial direction of the coupling shaft 23, and the coupling shaft 23 extends through the first receptacle 37. A second receptacle 38 extends from a central part of the first receptacle 37 in the axial direction of the coupling shaft 23 toward the connection portion 32 to accommodate the friction mechanism 70. The first receptacle 37 communicates with the second receptacle 38. The second receptacle 38 communicates with the exterior.

Two seal members 24 are attached to the first receptacle 37 at positions closer to the two opposite openings. In one example, the seal members 24 are O-rings. The gap formed between the coupling shaft 23 and the first receptacle 37 at a location between the two seal members 24 is filled with grease, which is one example of lubricant.

The second receptacle 38 includes a threaded portion 38A having internal threads and a sealing portion 38B having a smaller diameter than the threaded portion 38A. A step 38C is formed between the threaded portion 38A and the sealing portion 38B.

With the friction mechanism 70 arranged in the base 31 of the coupling member 30, when the threaded portion 71A is thread-coupled to the threaded portion 38A in the second receptacle 38, the plug 71 closes the opening of the second receptacle 38. In this state, the first step 71D of the plug 71 is in contact with the step 38C of the second receptacle 38. Additionally, the sealing portion 71B of the plug 71 is inserted into the sealing portion 38B of the second receptacle 38, and the seal member 72 seals between the sealing portion 71B and the sealing portion 38B. This hermetically seals a gap defined by the two seal members 24 and the seal member 72 of the plug 71 in the first receptacle 37, the second receptacle 38, and the coupling shaft 23.

One of the three urging members 74 located closest to the sealing portion 71B is in contact with the second step 71E. One of the three urging members 74 located closest to the pressing member 73 is in contact with an end surface of a tubular portion 73A of the pressing member 73. Instead of thread-coupling, the plug 71 may be attached to the second receptacle 38 by press-fitting, bonding, or welding. A means other than thread-coupling may be used as long as the plug 71 is attached to the second receptacle 38.

Since the plug 71 and the pressing member 73 hold the three urging members 74 in between, the three urging members 74 are compressed. The three urging members 74 force the pressing member 73 toward the coupling shaft 23. Consequently, the pressing member 73 is pressed against the coupling shaft 23. The force of the pressing member 73 against the coupling shaft 23 produces friction force when the bracket 21 and the coupling member 30 move relative to each other. The pressing member 73 is pressed against the coupling shaft 23 in the hermetically sealed gap defined in the first receptacle 37 and the second receptacle 38 by the two seal members 24 and the seal member 72 of the plug 71. The lubricant filling the gap effectively prevents the pressing member 73 and the coupling shaft 23 from seizing.

As shown in Fig. 1, the right support portion 34 of the coupling member 30, which is located close to the right arm 50, includes a driving side friction mechanism 80. The left support portion 33 of the coupling member 30, which is located close to the left arm 40, does not include any driving side friction mechanism 80. The driving side friction mechanism 80 of the right support portion 34 presses a pressing member against the right driving rotation shaft 36 to restrict rotation of the right arm 50 relative to the right driving rotation shaft 36. The driving side friction mechanism 80 is arranged on the right support portion 34 at a position closer to the input portions 54 (position closer to cylinder device 60) than to the right driving rotation shaft 36.

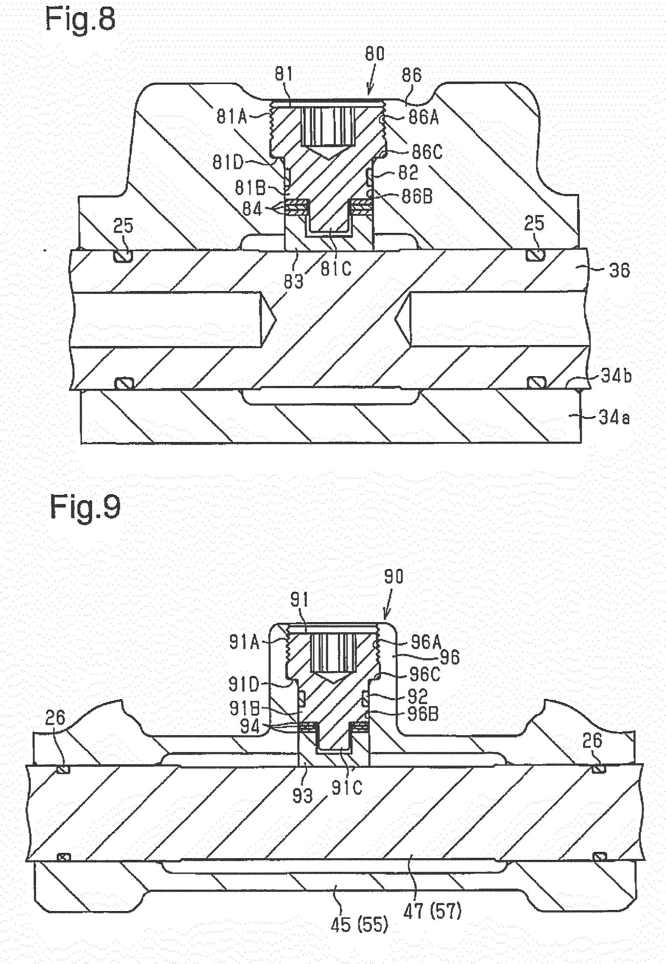

As shown in Fig. 8, in the same manner as the friction mechanism 70, the driving side friction mechanism 80 includes a plug 81, a pressing member 83, and three urging members 84. The plug 81, the pressing member 83, and the urging members 84 have the same shapes as the plug 71, the pressing member 73, and the urging members 74 of the friction mechanism 70. The number of the urging members 84 may be one, two, or four or more. Two seal members 25 are attached to portions of the right driving rotation shaft 36 that are inserted into the insertion hole 34b of the right support portion 34. The gap defined by the right driving rotation shaft 36 and the insertion hole 34b of right support portion 34 at a location between the two seal members 25 is filled with grease, which is one example of lubricant.

The right support portion 34 includes a receptacle 86 accommodating the driving side friction mechanism 80. The receptacle 86 includes a threaded portion 86A having internal threads and a sealing portion 86B having a smaller diameter than the threaded portion 86A. A step 86C is formed between the threaded portion 86A and the sealing portion 86B.

A threaded portion 81A, a sealing portion 81B, and an attachment portion 81C are continuously formed on the plug 81. When the threaded portion 81A is thread-coupled to the threaded portion 86A in the receptacle 86, the plug 81 closes the opening of the receptacle 86. In this state, a first step 81D of the plug 81 is in contact with the step 86C of the receptacle 86. Additionally, the sealing portion 81B of the plug 81 is inserted into the sealing portion 86B of the receptacle 86, and a seal member 82 attached to the sealing portion 81B seals between the sealing portion 81B and the sealing portion 86B. This hermetically seals a gap defined by the two seal members 25 and the seal member 82 of the plug 81 in the receptacle 86, the right support portion 34, and the right driving rotation shaft 36.

Since the plug 81 and the pressing member 83 hold the three urging members 84 in between, the three urging members 84 are compressed. The urging members 84 force the pressing member 83 toward the right driving rotation shaft 36. Consequently, the pressing member 83 is pressed against the right driving rotation shaft 36.

As shown in Fig. 2, the coupling portion 45 of the left arm 40 includes a braking side friction mechanism 90. The braking side friction mechanism 90, which is arranged in the coupling portion 45 of the left arm 40, presses a pressing member against the brake shoe rotation shaft 47 to restrict rotation of the brake shoe attachment member 46 relative to the brake shoe rotation shaft 47 (output portions 43).

As shown in Fig. 1, the coupling portion 55 of the right arm 50 includes a braking side friction mechanism 90. The braking side friction mechanism 90 arranged in the coupling portion 55 of the right arm 50 is pressed against the brake shoe rotation shaft 57 to restrict rotation of the brake shoe attachment member 56 relative to the brake shoe rotation shaft 57 (output portions 53).

As shown in Figs. 1 and 2, the braking side friction mechanism 90 is arranged on the left arm 40 (right arm 50) at a position closer to the left insertion portion 42 (right insertion portion 52) than to the brake shoe rotation shaft 47 (57). Also, the braking side friction mechanism 90 is arranged on the left arm 40 (right arm 50) at a position outer than the two left extensions 41 (two right extensions 51).

As shown in Fig. 9, in the same manner as the friction mechanism 70, the braking side friction mechanism 90 includes a plug 91, a pressing member 93, and three urging members 94. The plug 91, the pressing member 93, and the urging members 94 have the same shapes as the plug 71, the pressing member 73, and the urging members 74 of the friction mechanism 70. The number of the urging members 94 may be one, two, or four or more. Two seal members 26 are attached to portions of the brake shoe rotation shaft 47 (57) that are inserted into the coupling portion 45 (55). The gap formed between the brake shoe rotation shaft 47 (57) and the coupling portion 45 (55) at a location between the two seal members 26 is filled with grease, which is one example of lubricant.

The coupling portion 45 (55) includes a receptacle 96 accommodating the braking side friction mechanism 90. The receptacle 96 includes a threaded portion 96A having internal threads and a sealing portion 96B having a smaller diameter than the threaded portion 96A. A step 96C is formed between the threaded portion 96A and the sealing portion 96B.

A threaded portion 91A, a sealing portion 91B, and an attachment portion 91C are continuously formed on the plug 91. When the threaded portion 91A is thread-coupled to the threaded portion 96A in the receptacle 96, the plug 91 closes the opening of the receptacle 96. In this state, a first step 91 D of the plug 91 is in contact with the step 96C of the receptacle 96. Additionally, the sealing portion 91B of the plug 91 is inserted into the sealing portion 96B of the receptacle 96, and a seal member 92 attached to the sealing portion 91B seals between the sealing portion 91B and the sealing portion 96B. This hermetically seals a gap defined by the two seal members 26 and the seal member 92 of the plug 91 in the receptacle 96, the coupling portion 45 (55), and the brake shoe rotation shaft 47 (57).

Since the plug 91 and the pressing member 93 hold the three urging members 94 in between, the three urging members 94 are compressed. The urging members 94 force the pressing member 93 toward the brake shoe rotation shaft 47 (57). Consequently, the pressing member 93 is pressed against the brake shoe rotation shaft 47 (57).

The operation of the caliper device 20 having the above structure will now be described with reference to Fig. 5. The rotation direction of the coupling member 30 that moves the left arm 40 toward the bracket 21 is referred to as "the rotation direction R1." The rotation direction of the coupling member 30 that moves the right arm 50 toward the bracket 21 is referred to as "the rotation direction R2."

When the railway vehicle is traveling, the vibration produced by the traveling railway vehicle moves the wheel and the truck 10 relative to each other in a vehicle-width direction (thickness direction of disc 11), a vertical direction of the railway vehicle, and a front-rear direction of the railway vehicle. When the wheel and the truck 10 move relative to each other, the friction mechanism 70 restricts pivoting of the coupling member 30, which is supported by the bracket 21 coupled to the truck 10, about the coupling shaft 23 of the bracket 21. Thus, even when vibration is produced by the traveling railway vehicle, this structure limits the pivoting of the coupling member 30 relative to the bracket 21. When one of the brake shoes 12 is pushed by the disc 11, and the coupling member 30 receives the force from the disc 11 through one of the left arm 40 and the right arm 50, the coupling member 30 pivots about the coupling shaft 23. More specifically, the friction mechanism 70 is adjusted so that while limiting pivoting of the coupling member 30 about the coupling shaft 23 caused by the vibration, pivoting of the coupling member 30 about the coupling shaft 23 is allowed when the disc 11 contacts the brake shoes 12.

Additionally, the driving side friction mechanism 80 restricts rotation of the right arm 50 about the right driving rotation shaft 36 caused by the vibration produced by the traveling railway vehicle. The braking side friction mechanisms 90 restrict rotation of the brake shoe attachment members 46 and 56 about the brake shoe rotation shafts 47 and 57 caused by the vibration produced by the traveling railway vehicle. Thus, even when vibration is produced by the traveling railway vehicle, this structure limits the pivoting of the two brake shoes 12 and the right arm 50. This allows the caliper device 20 to maintain the position relative to the wheel when applying brakes and limits unnecessary contact of the brake shoes 12 that may occurs when the position of the caliper device 20 changes. Accordingly, uneven wear of the brake shoes 12 is limited.

As described above, the first embodiment has the following advantages.
(1) The resistance produced against the relative movement of the coupling member 30 and the bracket 21 restricts movement of the coupling member 30 relative to the bracket 21. Thus, unnecessary contact of the brake shoes 12 with the disc 11 is effectively limited in a non-braking state.
(2) The pivoting of the coupling member 30 relative to the bracket 21 allows relative movement of the bracket 21 and the coupling member 30.
(3) With a relatively simple structure that simply includes the friction mechanism 70 for increasing friction force between the bracket 21 and the coupling member 30 when the bracket 21 and the coupling member 30 move relative to each other, a resistance is applied to the relative movement.
(4) The friction mechanism 70 is arranged on the coupling member 30, which is one of the components of the caliper device 20. This eliminates the need for a further component for arranging the friction mechanism 70. As compared to a caliper device including a member dedicated to the arrangement of the friction mechanism 70, the number of components of the caliper device 20 is reduced.
(5) The pressing member 73 is pressed against the coupling shaft 23, about which the coupling member 30 pivots. Thus, the bracket 21 and the coupling member 30 do not need to further include a portion against which the pressing member 73 is pressed.
(6) The urging members 74 urge the pressing member 73 to apply a resistance to relative movement of the bracket 21 and the coupling member 30.
(7) As compared to a structure in which the axis of the coupling shaft 23 and the longitudinally middle portion of each brake shoe 12 are located at the same position in the longitudinal direction of the brake shoe 12, that is, the coupling shaft 23 is located between the cylinder device 60 and the coupling member 30, change in the position of the brake shoe 12 is increased when the coupling member 30 pivots. The structure of the first embodiment may be used in a railway vehicle in which relative movement of the truck 10 and the disc 11 is relatively large when the railway vehicle travels. Further, the caliper device 20 can be installed so that the cylinder device 60 and the coupling member 30 are located close to each other. Thus, the caliper device 20 is miniaturized in a direction in which the arms 40 and 50 extend.

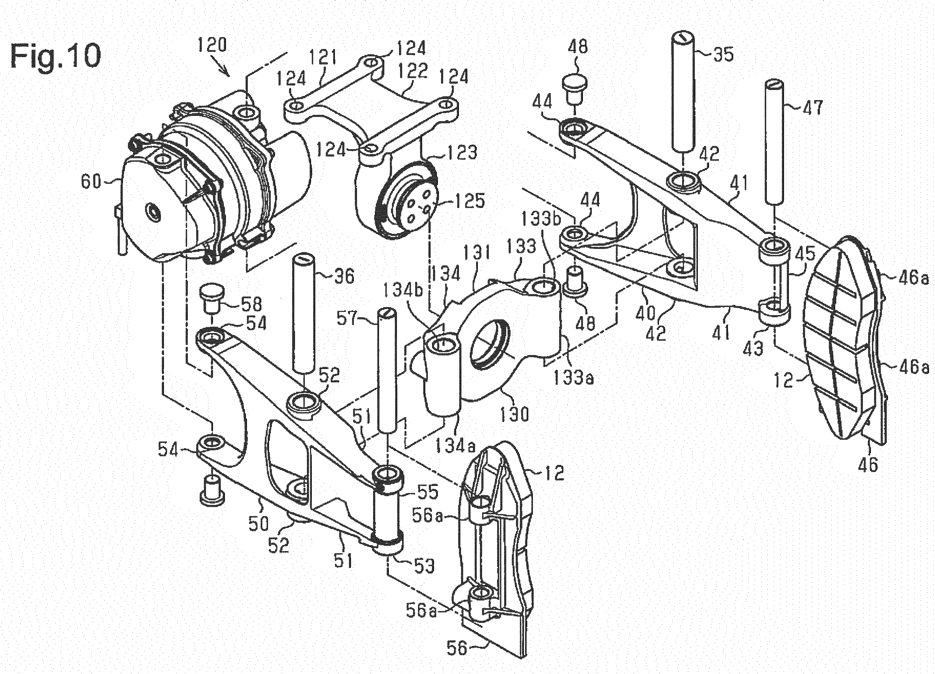

A second embodiment of a caliper device will now be described with reference to Figs. 10 to 13. The caliper device of the second embodiment differs from the first embodiment in that the axis of the coupling shaft and the longitudinally middle portion of each brake shoe 12 are located at the same position in the longitudinal direction of the brake shoe 12. The description will focus on the differences from the first embodiment.

Fig. 10 shows a caliper device 120 that includes a bracket 121 and a coupling member 130, the structure of which differs from that of the first embodiment. More specifically, the bracket 121 includes a rectangle attachment portion 122 and a connection portion 123 downwardly extending from the attachment portion 122. Each of the four corners of the attachment portion 122 has an attachment hole 124 used to attach the bracket 121 to the truck 10 with a bolt (not shown). The connection portion 123 of the bracket 121 includes a coupling shaft 125, to which the coupling member 130 is rotatably coupled.

The coupling member 130 includes a rotary portion 131 rotating relative to the coupling shaft 125, a left support portion 133, and a right support portion 134. The left support portion 133 and the right support portion 134 respectively extend leftward and rightward from the rotary portion 131 to support the left arm 40 and the right arm 50. When the coupling shaft 125 extends through the rotary portion 131, the coupling member 130 is pivotable about the coupling shaft 125. The left support portion 133 has a distal portion 133a through which an insertion hole 133b extends. The left driving rotation shaft 35, which functions as the support shaft rotatably supporting the left arm 40, is rotatably inserted through the insertion hole 133b. Also, the right support portion 134 has a distal portion 134a through which an insertion hole 134b extends. The right driving rotation shaft 36, which functions as the support shaft rotatably supporting the right arm 50, is rotatably inserted through the insertion hole 134b.

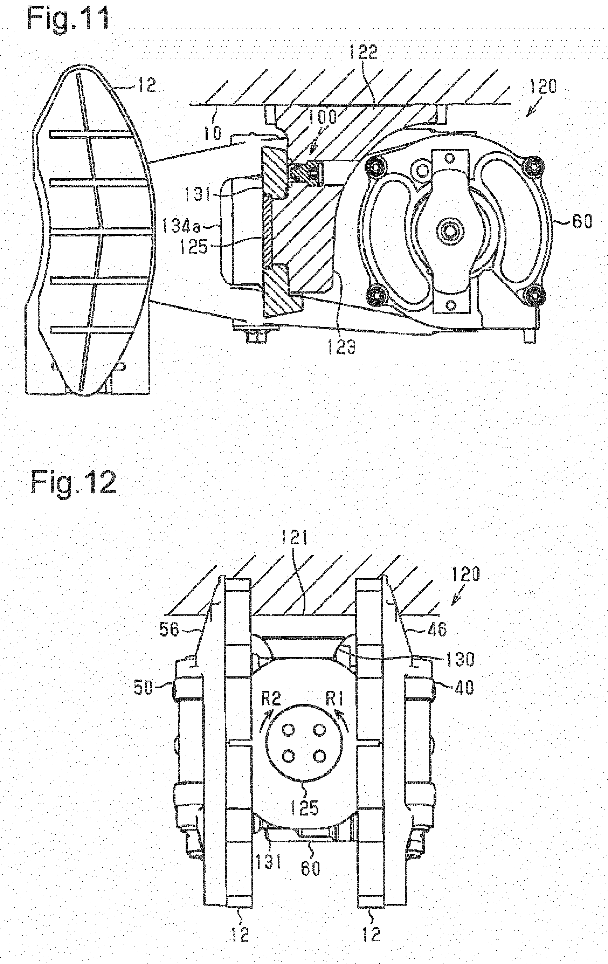

As shown in Fig. 11, the caliper device 120 includes a friction mechanism 100 that presses the coupling member 130 against the bracket 121 to increase friction force produced between the bracket 121 and the coupling member 130 when the coupling member 130 pivots. The friction mechanism 100 is arranged on a portion of the bracket 121 differing from the coupling shaft 125 to be pressed against the coupling member 130. The friction mechanism 100, which is arranged on, is inserted and fixed to the connection portion 123 of the bracket 121 from the side thereof closer to the cylinder device 60.

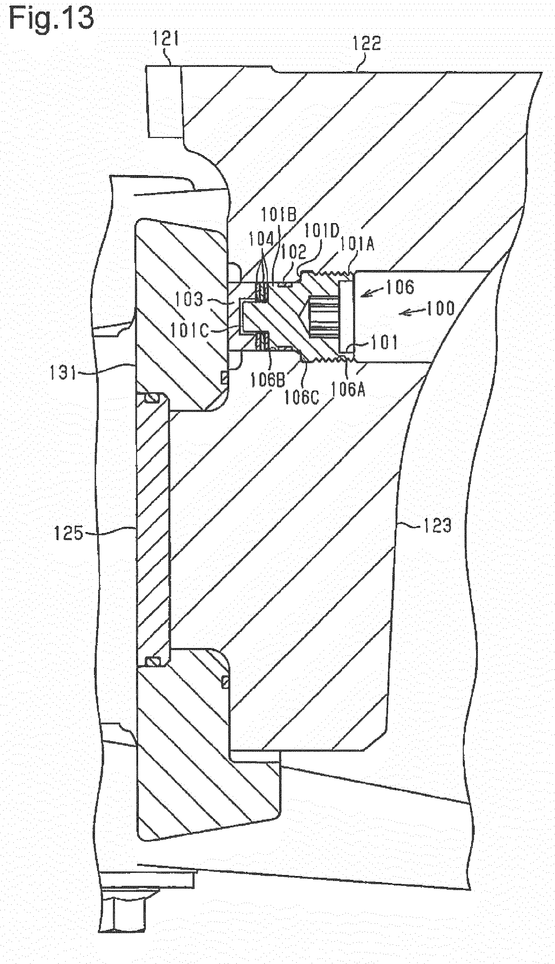

As shown in Fig. 13, the friction mechanism 100 includes a plug 101 coupled to the connection portion 123 of the bracket 121. In the same manner as the friction mechanism 70 of the first embodiment, the friction mechanism 100 includes the plug 101, a pressing member 103, and three urging members 104. The plug 101, the pressing member 103, and the urging members 104 have the same shapes as the plug 71, the pressing member 73, and the urging members 74 of the friction mechanism 70. The number of the urging members 104 may be one, two, or four or more.

The connection portion 123 of the bracket 121 includes a receptacle 106 accommodating the friction mechanism 100. The receptacle 106 includes a threaded portion 106A having internal threads and a sealing portion 106B having a smaller diameter than the threaded portion 106A. A step 106C is formed between the threaded portion 106A and the sealing portion 106B.

A threaded portion 101A, a sealing portion 101B, and an attachment portion 101C are continuously formed on the plug 101. When the threaded portion 101A is thread-coupled to the threaded portion 106A in the receptacle 106, the plug 101 closes the opening of the receptacle 106. In this state, a first step 101D of the plug 101 is in contact with the step 106C of the receptacle 106. Additionally, the sealing portion 101B of the plug 101 is inserted into the sealing portion 106B of the receptacle 106, and a seal member 102 attached to the sealing portion 101B seals between the sealing portion 101B and the sealing portion 106B.

Since the plug 101 and the pressing member 103 hold the three urging members 104 in between, the three urging members 104 are compressed. The urging members 104 force the pressing member 103 toward the rotary portion 131 of the coupling member 130. Consequently, the pressing member 103 is pressed against the rotary portion 131.

The operation of the caliper device 120 having the above structure will now be described with reference to Fig. 12. The rotation direction of the coupling member 130 that moves the left arm 40 toward the bracket 121 is referred to as "the rotation direction R1." The rotation direction of the coupling member 130 that moves the right arm 50 toward the bracket 121 is referred to as "the rotation direction R2."

When the railway vehicle is traveling, the vibration produced by the traveling railway vehicle moves the wheel and the truck 10 relative to each other in the vehicle-width direction (thickness direction of disc 11), the vertical direction, and the front-rear direction of the railway vehicle. When the wheel and the truck 10 move relative to each other, the friction mechanism 100 restricts pivoting of the coupling member 130, which is supported by the bracket 121 coupled to the truck 10, about the coupling shaft 125 of the bracket 121. Thus, even when vibration is produced by the traveling railway vehicle, this structure limits the pivoting of the coupling member 130 relative to the bracket 121. When one of the brake shoes 12 is pushed by the disc 11, and the coupling member 130 receives the force from the disc 11 through one of the left arm 40 and the right arm 50, the coupling member 130 pivots about the coupling shaft 125. More specifically, the friction mechanism 100 is adjusted so that while limiting pivoting of the coupling member 130 about the coupling shaft 125 caused by the vibration, pivoting of the coupling member 130 about the coupling shaft 125 is allowed when the disc 11 contacts the brake shoes 12. Therefore, even when vibration is produced by the traveling railway vehicle, the caliper device 120 maintains the position relative to the wheel when applying brakes. This limits unnecessary contact of the brake shoes 12 that may occurs when the position changes of the caliper device 120 and accordingly limits uneven wear of the brake shoes 12.

As described above, the second embodiment has the following advantages.
(1) The resistance produced against relative movement of the coupling member 130 and the bracket 121 restricts movement of the coupling member 130 relative to the bracket 121. Thus, unnecessary contact of the brake shoes 12 with the disc 11 is limited in a non-braking state.
(2) The pivoting of the coupling member 130 relative to the bracket 121 allows relative movement of the bracket 121 and the coupling member 130.
(3) With a relatively simple structure that simply includes the friction mechanism 100 for increasing friction force between the bracket 121 and the coupling member 130 when the bracket 121 and the coupling member 130 move relative to each other, a resistance is applied to the relative movement.
(4) The friction mechanism 100 is arranged on the bracket 121, which is one of the components of the caliper device 120. This eliminates the need for a further component for arranging the friction mechanism 100. As compared to a caliper device including a member dedicated to the arrangement of the friction mechanism 100, the number of components of the caliper device 120 is reduced.
(5) The area of contact between the pressing member 103 and the coupling member 130 is easily ensured. This limits wear of the pressing member 103 and the coupling member 130 caused by the pivoting of the coupling member 130.
(6) The urging members 104 urge the pressing member 103 to apply a resistance to relative movement of the bracket 121 and the coupling member 130.
(7) As compared to a structure in which the axis of the coupling shaft 125 is located above the longitudinally middle portion of each brake shoe 12 in the longitudinal direction of the brake shoe 12, change in the position of the brake shoe 12 is decreased when the coupling member 130 pivots. The structure of the second embodiment may be used in a railway vehicle in which relative movement of the truck 10 and the disc 11 is relatively small when the railway vehicle travels. Since the coupling shaft 125 is located between the cylinder device 60 and the coupling member 130, the caliper device 120 is miniaturized in a direction in which the left and right driving rotation shafts 35 and 36 extend.

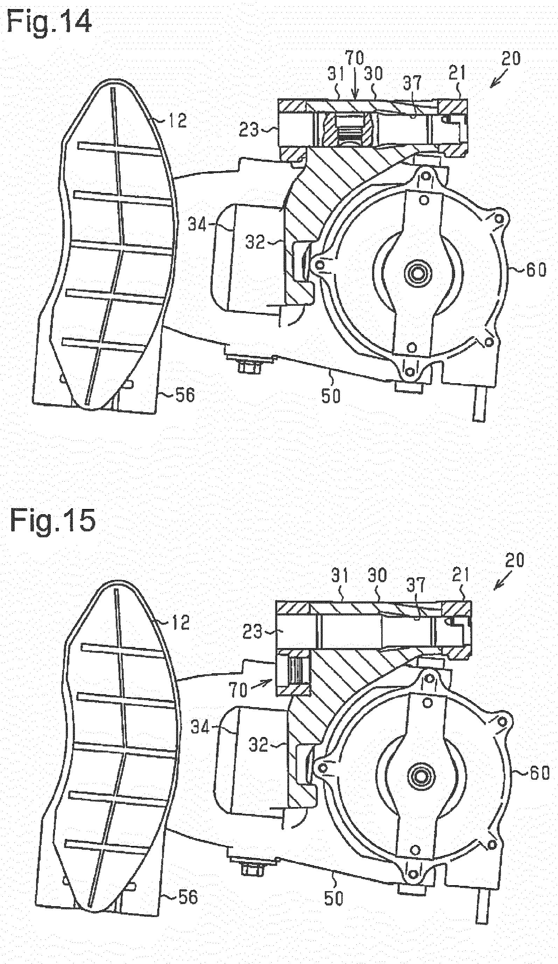

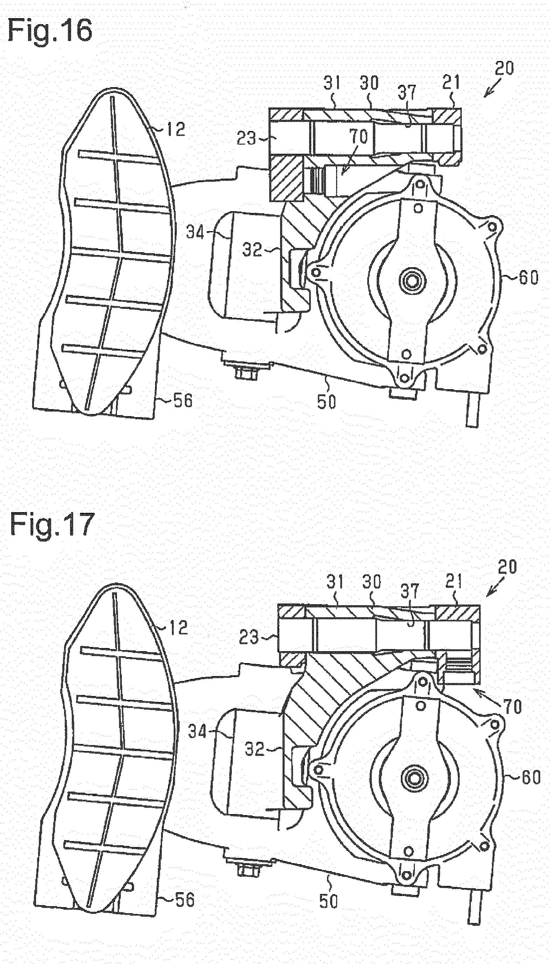

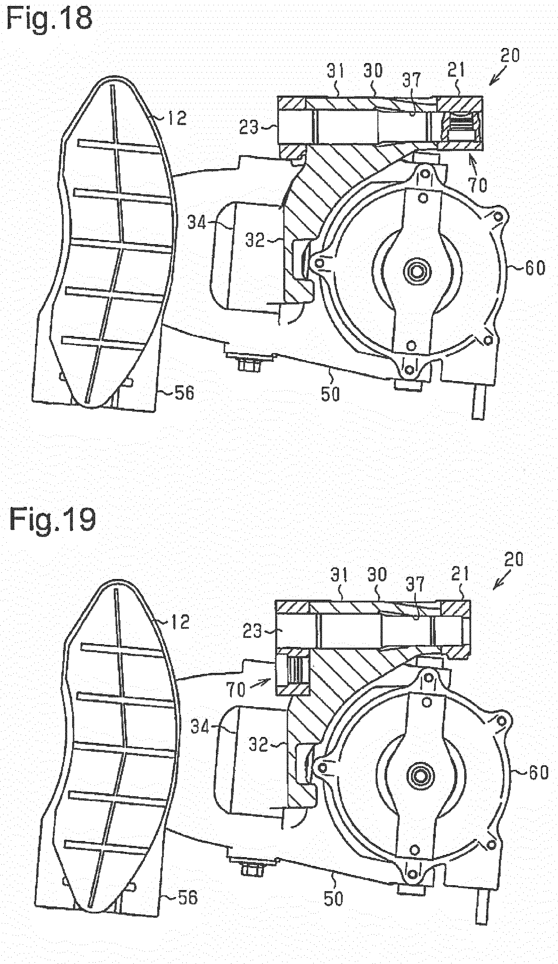

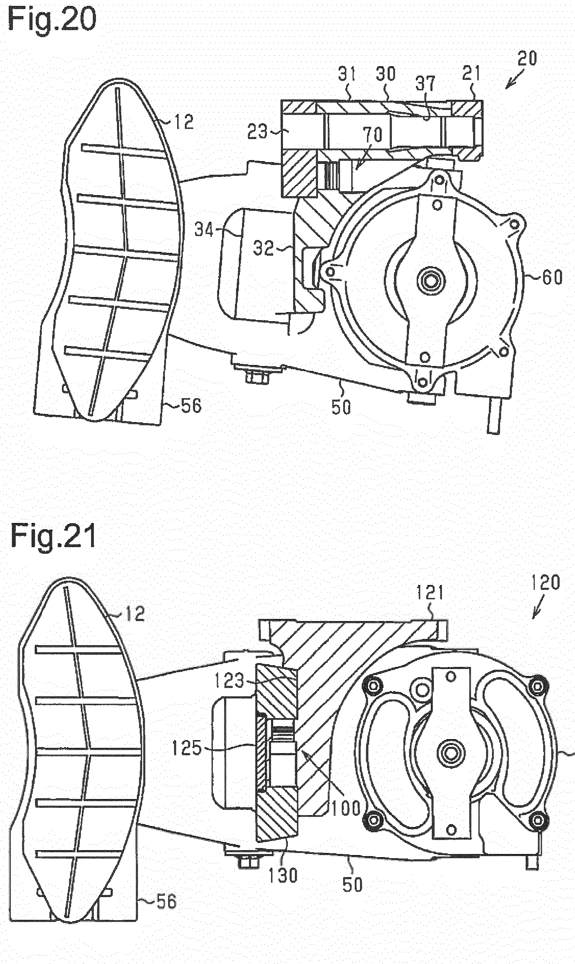

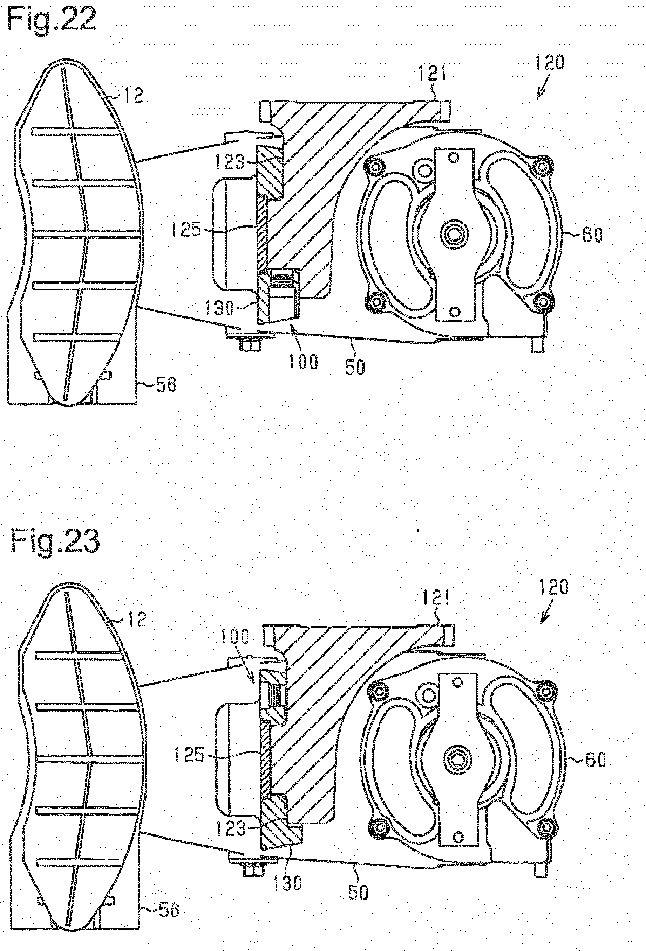

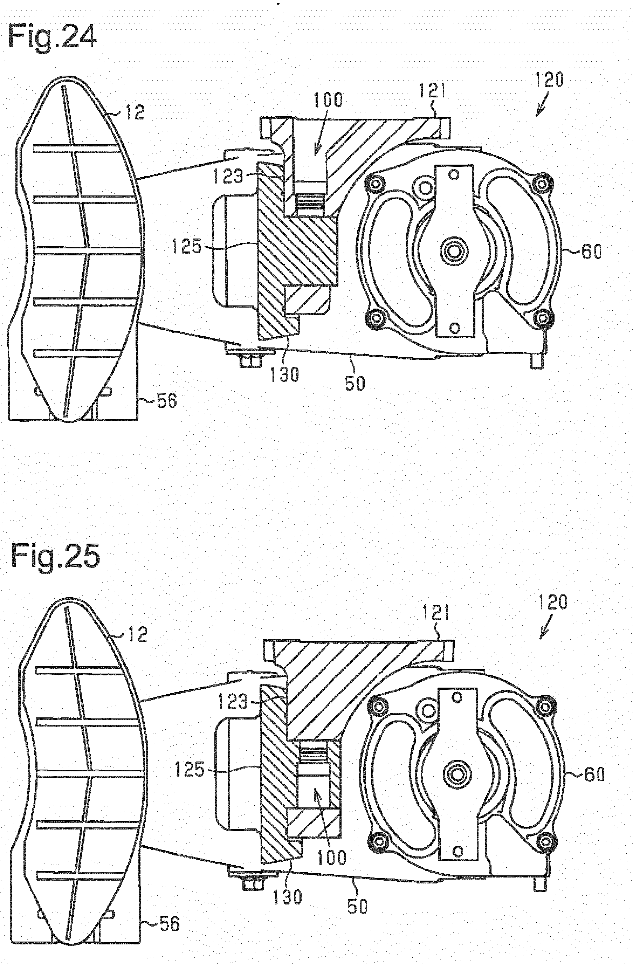

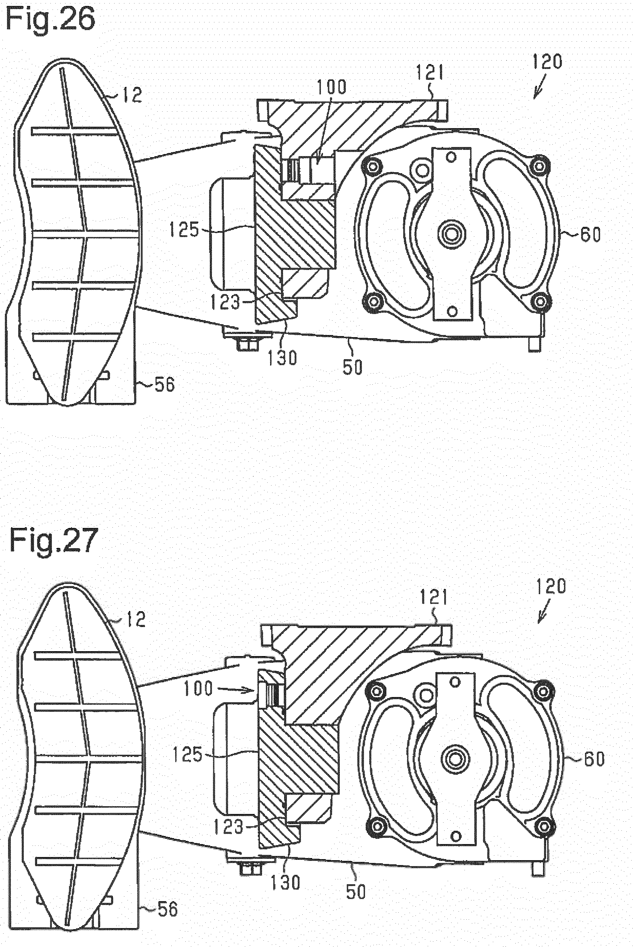

The above embodiments may be modified as follows.
- In the first embodiment, in the structure in which the coupling shaft 23 is fixed to the bracket 21 so that the coupling member 30 is rotated relative to the coupling shaft 23, the friction mechanism 70 is arranged on the coupling member 30 and pressed against the coupling shaft 23. Instead, as shown in Fig. 14, the friction mechanism 70 may be arranged on the coupling shaft 23 and pressed against the coupling member 30. More specifically, the coupling shaft 23 may include a receptacle for accommodating the friction mechanism 70 so that the friction mechanism 70 is pressed against an inner wall of the base 31 of the coupling member 30.
- Alternatively, as shown in Fig. 15, in the structure in which the coupling shaft 23 is fixed to the bracket 21 so that the coupling member 30 is rotated relative to the coupling shaft 23, the friction mechanism 70 may be arranged on the bracket 21 and pressed against the coupling member 30. More specifically, a portion of the bracket 21 opposed to the coupling member 30 may include a receptacle for accommodating the friction mechanism 70 so that the friction mechanism 70 is pressed against the base 31 of the coupling member 30.
- Alternatively, as shown in Fig. 16, in the structure in which the coupling shaft 23 is fixed to the bracket 21 so that the coupling member 30 is rotated relative to the coupling shaft 23, the friction mechanism 70 may be arranged on the coupling member 30 and pressed against the bracket 21. More specifically, a portion of the coupling member 30 opposed to the bracket 21 may include a receptacle for accommodating the friction mechanism 70.
- In the first embodiment, the coupling shaft 23 is fixed to the bracket 21 so that the coupling member 30 is rotated relative to the coupling shaft 23. Instead, as shown in Fig. 17, the coupling shaft 23 may be fixed to the coupling member 30 so that the coupling shaft 23 is rotated relative to the bracket 21. Additionally, the friction mechanism 70 may be arranged on the bracket 21 and pressed against the coupling shaft 23. More specifically, the bracket 21 may include a receptacle accommodating the friction mechanism 70.
- Alternatively, as shown in Fig. 18, in the structure in which the coupling shaft 23 is fixed to the coupling member 30 so that the coupling shaft 23 is rotated relative to the bracket 21, the friction mechanism 70 may be arranged on the coupling shaft 23 and pressed against the bracket 21. More specifically, the coupling shaft 23 may include a receptacle for accommodating the friction mechanism 70.
- Alternatively, as shown in Fig. 19, in the structure in which the coupling shaft 23 is fixed to the coupling member 30 so that the coupling shaft 23 is rotated relative to the bracket 21, the friction mechanism 70 may be arranged on the bracket 21 and pressed against the coupling member 30. More specifically, a portion of the bracket 21 opposed to the coupling member 30 may include a receptacle for accommodating the friction mechanism 70 so that the friction mechanism 70 is pressed against the base 31 of the coupling member 30.
- Alternatively, as shown in Fig. 20, in the structure in which the coupling shaft 23 is fixed to the coupling member 30 so that the coupling shaft 23 is rotated relative to the bracket 21, the friction mechanism 70 may be arranged on the base 31 of the coupling member 30 and pressed against the bracket 21. More specifically, a portion of the coupling member 30 opposed to the bracket 21 may include a receptacle for accommodating the friction mechanism 70.
- In the second embodiment, in the structure in which the coupling shaft 125 is fixed to the bracket 121 so that the coupling member 130 is rotated relative to the coupling shaft 125, the friction mechanism 100 is arranged on the bracket 121 and pressed against the coupling shaft 125. Instead, as shown in Fig. 21, the friction mechanism 100 may be arranged on the coupling shaft 125 and pressed against the coupling member 130. More specifically, the coupling shaft 125 may include a receptacle for accommodating the friction mechanism 100 so that the friction mechanism 100 is pressed against an inner wall of the rotary portion 131 of the coupling member 130.
- Alternatively, as shown in Fig. 22, in the structure in which the coupling shaft 125 is fixed to the bracket 121 so that the coupling member 130 is rotated relative to the coupling shaft 125, the friction mechanism 100 may be arranged on the coupling member 130 and pressed against the coupling shaft 125. More specifically, the rotary portion 131 of the coupling member 130 may include a receptacle for accommodating the friction mechanism 100 so that the friction mechanism 100 is pressed against the coupling shaft 125.
- Alternatively, as shown in Fig. 23, in the structure in which the coupling shaft 125 is fixed to the bracket 121 so that the coupling member 130 is rotated relative to the coupling shaft 125, the friction mechanism 100 may be arranged on the coupling member 130 and pressed against the bracket 121. More specifically, the rotary portion 131 of the coupling member 130 may include a receptacle for accommodating the friction mechanism 100 so that the friction mechanism 100 is pressed against a portion of the bracket 121 opposed to the coupling member 130.
- In the second embodiment, the coupling shaft 125 is fixed to the bracket 121 so that the coupling member 130 is rotated relative to the coupling shaft 125. Instead, as shown in Fig. 24, the coupling shaft 125 may be fixed to the coupling member 130 so that the coupling shaft 125 is rotated relative to the bracket 121. Additionally, the friction mechanism 100 may be arranged on the bracket 121 and pressed against the coupling shaft 125. More specifically, the bracket 121 may include a receptacle for accommodating the friction mechanism 100.
- Alternatively, as shown in Fig. 25, in the structure in which the coupling shaft 125 is fixed to the coupling member 130 so that the coupling shaft 125 is rotated relative to the bracket 121, the friction mechanism 100 may be arranged on the coupling shaft 125 and pressed against the bracket 121. More specifically, the coupling shaft 125 may include a receptacle for accommodating the friction mechanism 100.
- Alternatively, as shown in Fig. 26, in the structure in which the coupling shaft 125 is fixed to the coupling member 130 so that the coupling shaft 125 is rotated relative to the bracket 121, the friction mechanism 100 may be arranged on the bracket 121 and pressed against the coupling member 130. More specifically, a portion of the bracket 121 opposed to the coupling member 130 may include a receptacle for accommodating the friction mechanism 100 so that the friction mechanism 100 is pressed against the rotary portion 131 of the coupling member 130.
- Alternatively, as shown in Fig. 27, in the structure in which the coupling shaft 125 is fixed to the coupling member 130 so that the coupling shaft 125 is rotated relative to the bracket 121, the friction mechanism 100 may be arranged on the rotary portion 131 of the coupling member 130 and pressed against the bracket 121. More specifically, a portion of the coupling member 130 opposed to the bracket 121 may include a receptacle for accommodating the friction mechanism 100.
- In the above embodiments, the urging members 74, 84, 94, 104 are disc springs. Anything may be used other than disc springs as long as force pressing the pressing member 73, 83, 93, 103 is applicable. For example, the urging members 74, 84, 94, 104 may be a different kind of spring such as a coil spring or an elastic member such as an O-ring. Alternatively, instead of the urging members 74, 84, 94, 104, one or more urging members including a first permanent magnet and a second permanent magnet may be used. The first permanent magnet is attached to the attachment portion 71C, 81C, 91C, 101C of the plug 71, 81, 91, 101 and the second permanent magnet is attached to the pressing member 73, 83, 93, 103 so that portions of the first permanent magnet and the second permanent magnet opposed to each other have the same magnetic pole. In this case, the pressing member 73, 83, 93, 103 is pushed by repulsive force produced between the first permanent magnet and the second permanent magnet.
- The urging members 74, 84, 94,104 may be omitted from the above embodiments. In this case, the plug 71, 81, 91, 101 is in contact with the pressing member 73, 83, 93, 103.
- In the above embodiments, the driving side friction mechanism 80 is arranged on the right arm 50. Instead, the driving side friction mechanism 80 may be arranged on the left arm 40.
- The driving side friction mechanism 80 may be omitted from the above embodiments.
- The braking side friction mechanisms 90 may be omitted from the above embodiments.
- In the above embodiments, the friction mechanisms function as resistance application portions. Instead of the friction force produced by contact between relatively moving members, a mechanism using magnetic force or fluidal viscous force may be used as a resistance application portion.
- In the above embodiments, the bracket 21 (121) is arranged in the caliper device 20 (120). Instead, the bracket 21 (121) may be arranged in a truck of a vehicle. More specifically, the caliper device 20 (120) does not need to include the bracket 21 (121).

Technical concepts that can be acknowledged from the above embodiments together with the advantages are as follows.
- A caliper device in which the coupling shaft is fixed to the bracket, and the friction mechanism is arranged on the coupling shaft and pressed against the coupling member.

With the above structure, the friction mechanism arranged on the coupling shaft is pressed against the coupling member. Thus, relative movement of the coupling member and the bracket is restricted.
- A caliper device in which the coupling shaft is fixed to the bracket, and the friction mechanism is arranged on the bracket and pressed against the coupling member.

With the above structure, the friction mechanism arranged on the bracket is pressed against the coupling member. Thus, relative movement of the coupling member and the bracket is restricted.
- A caliper device in which the coupling shaft is fixed to the bracket, and the friction mechanism is arranged on the coupling member and pressed against a portion of the bracket differing from the coupling shaft.

With the above structure, the friction mechanism arranged on the coupling member is pressed against the portion of the bracket differing from the coupling shaft. Thus, relative movement of the coupling member and the bracket is restricted.
- A caliper device in which the coupling shaft is fixed to the coupling member, and the friction mechanism is arranged on the bracket and pressed against the coupling shaft.

With the above structure, the coupling member includes the coupling shaft, and the friction mechanism arranged on the bracket is pressed against the coupling shaft. Thus, relative movement of the coupling member and the bracket is restricted.
- A caliper device in which the coupling shaft is fixed to the coupling member, and the friction mechanism is arranged on the coupling shaft and pressed against the bracket.

With the above structure, the coupling member includes the coupling shaft, and the friction mechanism arranged on the coupling shaft is pressed against the bracket. Thus, relative movement of the coupling member and the bracket is restricted.
- A caliper device in which the coupling shaft is fixed to the coupling member, and the friction mechanism is arranged on the bracket and pressed against a portion of the coupling member differing from the coupling shaft.

With the above structure, the coupling member includes the coupling shaft, and the friction mechanism arranged on the bracket is pressed against the portion of the coupling member differing from the coupling shaft. Thus, relative movement of the coupling member and the bracket is restricted.
- A caliper device in which the coupling shaft is fixed to the coupling member, and the friction mechanism is arranged on a portion of the coupling member differing from the coupling shaft to be pressed against the bracket.

With the above structure, the coupling member includes the coupling shaft, and the friction mechanism arranged on the portion of the coupling member differing from the coupling shaft is pressed against the bracket. Thus, relative movement of the coupling member and the bracket is restricted.
- Acaliper device in which the coupling shaft is fixed to the bracket, and the friction mechanism is arranged on the coupling member and pressed against the coupling shaft.

With the above structure, the bracket includes the coupling shaft, and the friction mechanism arranged on the coupling member is pressed against the coupling shaft. Thus, relative movement of the coupling member and the bracket is restricted.
- A caliper device in which each of the two brake shoes is belt-shaped, and the axis of the coupling shaft is located at a position different from the longitudinally middle portion of each of the two brake shoes in the longitudinal direction of the brake shoe.

The above structure increases change in the position of the brake shoes when the coupling member pivots as compared to a structure in which the axis of the coupling shaft and the middle portion of each brake shoe are located at the same position in the longitudinal direction of the brake shoe. Thus, the above structure may be used in a railway vehicle in which relative movement of the truck and the disc is relatively large when the railway vehicle travels.
- A caliper device in which each of the two brake shoes is belt-shaped, and the axis of the coupling shaft and the longitudinally middle portion of each of the two brake shoes are located at the same position in the longitudinal direction of the brake shoe.

The above structure decreases change in the position of the brake shoes when the coupling member pivots as compared to a structure in which the axis of the coupling shaft is located above the longitudinally middle portion of each brake shoe in the longitudinal direction of the brake shoe. Thus, the above structure may be used in a railway vehicle in which relative movement of the truck and the disc is relatively small when the railway vehicle travels.

It should be apparent to those skilled in the art that the present invention may be embodied in many other specific forms without departing from the scope of the invention. For example, one or more of the components may be omitted from the components described in the embodiments (or one or more aspects thereof). Further, components in different embodiments may be appropriately combined.

The present examples and embodiments are to be considered as illustrative and not restrictive, and the invention is not to be limited to the details given herein, but may be modified within the scope and equivalence of the appended claims.

## Claims

1. A caliper device (20; 120) comprising a coupling member (30; 130) coupled to a bracket (21; 121) and movable relative to the bracket (21; 121), the bracket (21; 121) being suitable to be attached to a vehicle having a wheel, wherein
the coupling member (30; 130) supports two arms (40, 50),
two brake shoes (12) are located to hold a disc (11) that rotates together with the wheel of the vehicle,
when the two arms (40, 50) rotate, the two brake shoes (12) are selectively moved between a position contacting the disc (11) and a position separated from the disc (11), and
the caliper device (20; 120) being **characterized by** further comprising a resistance application portion (70; 100) that applies a resistance to relative movement of the coupling member (30; 130) and the bracket (21; 121).

2. The caliper device (20; 120) according to claim 1, wherein the coupling member (30; 130) is coupled to the bracket (21; 121) by a coupling shaft (23; 125) and pivotable about the coupling shaft (23; 125).

3. The caliper device (20; 120) according to claim 1, wherein the resistance application portion includes a friction mechanism (70; 100) that increases friction force produced by relative movement of the coupling member (30; 130) and the bracket (21; 121).

4. The caliper device (20; 120) according to claim 2, wherein the resistance application portion includes a friction mechanism (70; 100) that increases friction force produced by relative movement of the coupling member (30; 130) and the bracket (21; 121).

5. The caliper device (20; 120) according to claim 3, wherein
the friction mechanism (70; 100) includes a pressing member (73; 103) arranged on one of the bracket (21; 121) and the coupling member (30; 130), and
when the coupling member (30; 130) and the bracket (21; 121) pivot, the pressing member (73; 103) produces the friction force by being pressed against a portion moving relative to the pressing member (73; 103).

6. The caliper device (20; 120) according to claim 4, wherein
the friction mechanism (70; 100) includes a pressing member (73; 103) arranged on one of the bracket (21; 121), the coupling member (30; 130), and the coupling shaft (23; 125), and
when the coupling member (30; 130) and the bracket (21; 121) pivot, the pressing member (73; 103) produces the friction force by being pressed against a portion moving relative to the pressing member (73; 103).

7. The caliper device (20 according to claim 6, wherein
the coupling shaft (23) is fixed to one of the bracket (21) and the coupling member (30), and
the pressing member (73) is arranged on a further one of the bracket (21) and the coupling member (30) and pressed against the coupling shaft (23).

8. The caliper device (120) according to claim 5, wherein when the pressing member (103), which is arranged on one of the bracket (121) and the coupling member (130), is pressed against a further one of the bracket (121) and the coupling member (130), the pressing member (103) is in planar contact with the further one of the bracket (121) and the coupling member (130).

9. The caliper device (120) according to claim 6, wherein
the pressing member (103) is arranged on one of the bracket (121) and the coupling member (130), and
when the pressing member (103) is pressed against a further one of the bracket (121) and the coupling member (130), the pressing member (103) is in planar contact with the further one of the bracket (121) and the coupling member (130).

10. The caliper device (20; 120) according to any one of claims 5 to 9, wherein the friction mechanism (70; 100) includes an urging member (74; 104) that produces the friction force by urging the pressing member (73; 103).

## Patentansprüche

1. Bremssattel-Vorrichtung (20; 120), die ein Kopplungs-Element (30; 130) umfasst, das mit einem Träger (21; 121) gekoppelt ist und relativ zu dem Träger (21; 121) bewegt werden kann, wobei der Träger (21; 121) zum Anbringen an einem Fahrzeug mit einem Rad geeignet ist, und das Kopplungs-Element (30; 130) zwei Arme (40, 50) trägt,
zwei Bremsbacken (12) so angeordnet sind, dass sie eine Scheibe (11) halten, die sich zusammen mit dem Rad des Fahrzeugs dreht,
wenn sich die zwei Arme (40, 50) drehen, die zwei Bremsbacken (12) selektiv zwischen einer Position, in der sie mit der Scheibe (11) in Kontakt sind, und einer Position bewegt werden, in der sie von der Scheibe (11) getrennt sind, und
wobei die Bremssattel-Vorrichtung (20; 120) **dadurch gekennzeichnet ist, dass** sie des Weiteren einen Abschnitt (70; 100) zur Ausübung von Widerstand umfasst, der einen Widerstand gegen relative Bewegung des Kopplungs-Elementes (30; 130) und des Trägers (21; 121) ausübt.

2. Bremssattel-Vorrichtung (20; 120) nach Anspruch 1, wobei das Kopplungs-Element (30; 130) über eine Kopplungs-Welle (23; 125) mit dem Träger (21; 121) gekoppelt ist und um die Kopplungs-Welle (23; 125) herum geschwenkt werden kann.

3. Bremssattel-Vorrichtung (20; 120) nach Anspruch 1, wobei der Abschnitt zur Ausübung von Widerstand einen Reibungs-Mechanismus (70; 100) enthält, der Reibungskraft verstärkt, die durch relative Bewegung des Kopplungs-Elementes (30; 130) und des Trägers (21; 121) erzeugt wird.

4. Bremssattel-Vorrichtung (20; 120) nach Anspruch 2, wobei der Abschnitt zur Ausübung von Widerstand einen Reibungs-Mechanismus (70; 100) enthält, der Reibungskraft verstärkt, die durch relative Bewegung des Kopplungs-Elementes (30; 130) und des Trägers (21; 121) erzeugt wird.

5. Bremssattel-Vorrichtung (20; 120) nach Anspruch 3, wobei
der Reibungs-Mechanismus (70; 100) ein Press-Element (73; 103) enthält, das an dem Träger (21; 121) oder dem Kopplungs-Element (30; 130) angeordnet ist, und
wenn das Kopplungs-Element (30; 130) und der Träger (21; 121) geschwenkt werden, das Press-Element (73; 103) die Reibungskraft erzeugt, wenn es an einen Abschnitt gedrückt wird, der sich relativ zu dem Press-Element (73; 103) bewegt.

6. Bremssattel-Vorrichtung (20; 120) nach Anspruch 4, wobei
der Reibungs-Mechanismus (70; 100) ein Press-Element (73; 103) enthält, das an dem Träger (21; 121), dem Kopplungs-Element (30; 130) oder der Kopplungs-Welle (23; 125) angeordnet ist, und
wenn das Kopplungs-Element (30; 130) und der Träger (21; 121) geschwenkt werden, das Press-Element (73; 103) die Reibungskraft erzeugt, wenn es an einen Abschnitt gedrückt wird, der sich relativ zu dem Press-Element (73; 103) bewegt.

7. Bremssattel-Vorrichtung (20) nach Anspruch 6, wobei
die Kopplungs-Welle (23) an dem Träger (21) oder dem Kopplungs-Element (30) befestigt ist, und
das Press-Element (73) an einem weiteren Element von dem Träger (21) und dem Kopplungs-Element (30) angeordnet ist und an die Kopplungs-Welle (23) gedrückt wird.

8. Bremssattel-Vorrichtung (120) nach Anspruch 5, wobei, wenn das Press-Element (103), das an dem Träger (121) oder dem Kopplungs-Element (130) angeordnet ist, an ein weiteres Element von dem Träger (121) und dem Kopplungs-Element (130) gedrückt wird, das Press-Element (103) in Flächenkontakt mit dem weiteren Element von dem Träger (121) und dem Kopplungs-Element (130) ist.

9. Bremssattel-Vorrichtung (120) nach Anspruch 6, wobei
das Press-Element (103) an dem Träger (121) oder dem Kopplungs-Element (130) angeordnet ist, und
wenn das Press-Element (103) an ein weiteres Element von dem Träger (121) und dem Kopplungs-Element (130) gedrückt wird, das Press-Element (103) in Flächenkontakt mit dem weiteren Element von dem Träger (121) und dem Kopplungs-Element (130) ist.

10. Bremssattel-Vorrichtung (20; 120) nach einem der Ansprüche 5 bis 9, wobei der Reibungs-Mechanismus (70; 100) ein Drück-Element (74; 104) enthält, das die Reibungskraft durch Drücken des Press-Elementes (73; 103) erzeugt.

## Revendications

1. Dispositif à étrier (20 ; 120) comprenant un élément de couplage (30 ; 130) couplé à un support (21 ; 121) et mobile par rapport au support (21 ; 121), le support (21 ; 121) étant adapté pour être attaché à un véhicule ayant une roue, dans lequel
l'élément de couplage (30 ; 130) supporte deux bras (40, 50),
deux mâchoires de frein (12) sont agencées pour maintenir un disque (11) qui tourne conjointement à la roue du véhicule,
quand les deux bras (40, 50) tournent, les deux mâchoires de frein (12) sont déplacées sélectivement entre une position en contact avec le disque (11) et une position séparée du disque (11), et
le dispositif à étrier (20 ; 120) est **caractérisé en ce qu'**il comprend en outre une portion d'application de résistance (70 ; 100) qui applique une résistance au déplacement relatif de l'élément de couplage (30 ; 130) et du support (21 ; 121).

2. Dispositif à étrier (20 ; 120) selon la revendication 1, dans lequel l'élément de couplage (30 ; 130) est couplé au support (21 ; 121) par un axe de couplage (23 ; 125) et est pivotable autour de l'axe de couplage (23 ; 125).

3. Dispositif à étrier (20 ; 120) selon la revendication 1, dans lequel la portion d'application de résistance comprend un mécanisme de friction (70 ; 100) qui augmente la force de friction produite par le déplacement relatif entre l'élément de couplage (30 ; 130) et le support (21 ; 121) .

4. Dispositif à étrier (20 ; 120) selon la revendication 2, dans lequel la portion d'application de résistance comprend un mécanisme de friction (70 ; 100) qui augmente la force de friction produite par le déplacement relatif entre l'élément de couplage (30 ; 130) et le support (21 ; 121) .

5. Dispositif à étrier (20 ; 120) selon la revendication 3, dans lequel
le mécanisme de friction (70 ; 100) comprend un élément de pression (73 ; 103) agencé sur un élément parmi le support (21 ; 121) et l'élément de couplage (30 ; 130), et
quand l'élément de couplage (30 ; 130) et le support (21 ; 121) pivotent, l'élément de pression (73 ; 103) produit la force de friction en étant pressé contre une portion mobile par rapport à l'élément de pression (73 ; 103).

6. Dispositif à étrier (20 ; 120) selon la revendication 4, dans lequel
le mécanisme de friction (70 ; 100) comprend un élément de pression (73 ; 103) agencé sur un élément parmi le support (21 ; 121), l'élément de couplage (30 ; 130) et l'axe de couplage (23 ; 125), et
quand l'élément de couplage (30 ; 130) et le support (21 ; 121) pivotent, l'élément de pression (73 ; 103) produit la force de friction en étant pressé contre une portion mobile par rapport à l'élément de pression (73 ; 103) .

7. Dispositif à étrier (20) selon la revendication 8, dans lequel
l'axe de couplage (23) est fixé à un élément parmi le support (21) et l'élément de couplage (30), et l'élément de pression (73) est agencé sur un autre élément parmi le support (21) et l'élément de couplage (30) et pressé contre l'axe de couplage (23).

8. Dispositif à étrier (120) selon la revendication 5, dans lequel, quand l'élément de pression (103), qui est agencé sur un élément parmi le support (121) et l'élément de couplage (130), est pressé contre un autre élément parmi le support (121) et l'élément de couplage (130), l'élément de pression (103) est en contact planaire avec l'autre élément parmi le support (121) et l'élément de couplage (130) .

9. Dispositif à étrier (120) selon la revendication 8, dans lequel
l'élément de pression (103) est agencé sur un élément parmi le support (121) et l'élément de couplage (130), et
quand l'élément de pression (103) est pressé contre un autre élément parmi le support (121) et l'élément de couplage (130), l'élément de pression (103) est en contact planaire avec l'autre élément parmi le support (121) et l'élément de couplage (130).

10. Dispositif à étrier (20 ; 120) selon l'une quelconque des revendications 5 à 9, dans lequel le mécanisme de friction (70 ; 100) comprend un élément de poussée (74 ; 104) qui produit la force de friction en poussant l'élément de pression (73 ; 103).
